Europäisches Patentamt

European Patent Office

Office européen des brevets

(19)

(11) Numéro de publication: **0 184 489**
**B1**

(12) **FASCICULE DE BREVET EUROPEEN**

(45) Date de publication du fascicule du brevet: **30.01.91**

(51) Int. Cl.⁵: **B 60 D 1/00**

(21) Numéro de dépôt: **85402200.1**

(22) Date de dépôt: **14.11.85**

(54) Attelage à fourreau mobile.

(30) Priorité: **16.11.84 FR 8417508**

(43) Date de publication de la demande:
**11.06.86 Bulletin 86/24**

(45) Mention de la délivrance du brevet:
**30.01.91 Bulletin 91/05**

(84) Etats contractants désignés:
**AT BE DE FR GB IT NL SE**

(56) Documents cités:
**FR-A-1 552 483**
**GB-A-1 030 437**
**GB-A-1 470 941**
**GB-A-2 042 316**
**SE-B- 312 730**
**US-A-3 863 955**
**US-A-4 542 913**

(73) Titulaire: **ATTELAGES LEMOINE LA MECANO
SOUDURE REMOISE Société Anonyme
1 rue du Commandant Barbier
F-51100 Reims (FR)**

(72) Inventeur: **Mijot, Guy
3, rue des 16 et 22ème dragons
F-51100 Reims (FR)**

(74) Mandataire: **Gérardin, Robert Jean René
Cabinet Robert Gérardin 3A, avenue Georges
Clémenceau Boîte Postale 2 719
F-51055 Reims Cédex (FR)**

Courier Press, Leamington Spa, England.

**Description**

L'invention concerne un attelage à fourreau mobile recevant tout système d'accrochage pour remorques ou autres engins tractés, utilisés sur du matériel agricole et sur les engins de travaux publics.

Il est connu d'assurer le déplacement de matériels roulants non motorisés, ou d'outils traînés, à l'aide de véhicules tracteurs équipés d'un système comportant soit un crochet, une barre d'attelage fixe ou oscillante, ou un piton.

Il est connu aussi d'utiliser un fourreau capable de servir à la fois de porte-barre d'attelage, de porte-barre oscillante, de porte piton ou d'autres systèmes d'accrochage. Pour faciliter l'accrochage, de tels fourreaux sont montés pivotants autour d'un axe d'articulation fixe, solidaire du châssis. Dans ce cas, lorsque le fourreau est en position basse, il entraîne le système d'attelage qu'il porte sous le tracteur.

Il existe divers moyens, connus de l'homme de l'art, permettant de faire effectuer à ce fourreau la trajectoire souhaitée, parmi lesquels figure un système de biellettes de longueurs différentes qui, lors de leur articulation, font effectuer un pivotement, accompagné d'une translation, au dispositif qu'elles supportent. Un tel moyen, décrit dans la norme française NF 4.140.32, est utilisé pour obtenir le pivotement du système de relevage arrière des tracteurs.

On connaît également le brevet SE—B—312 730 qui décrit un attelage constitué d'un bâti auquel est suspendu une partie mobile articulée sur deux leviers. Ce dispositif permet d'abaisser à l'aide d'un vérin monté sur le système classique de relevage d'un tracteur. Le vérin est orienté vers l'avant de telle façon que, combiné avec la trajectoire autorisée par les leviers, il relève la partie mobile en conservant le crochet exactement dans le même plan vertical. Par ailleurs, lors de l'accrochage, le vérin et le système de relevage reprennent seuls les efforts et les chocs, lorsqu'il n'y a pas alignement immédiat parfait entre l'attelage et la remorque.

Un autre inconvénient de ce dispositif est celui de la visibilité pour l'utilisateur, car, lorsque le crochet descend, il est masqué par le bâti et le châssis du tracteur; ce qui ne facilite pas le positionnement lors des manoeuvres d'accrochage.

Le brevet GB—A—1 470 941 propose une partie mobile particulière, puisqu'elle présente des crochets de verrouillage qui viennent se bloquer sur le bâti du tracteur. Ainsi, les efforts après accrochage, sont supportés en totalité par le châssis du tracteur dans le plan vertical et, en partie, dans le plan horizontal, au lieu de les faire supporter par le seul système de relevage. Cette partie mobile est pivotante sur un seul axe et elle présente les inconvénients des dispositifs de l'art antérieur, à savoir masquage du crochet lors des manoeuvres d'accrochage, absence d'arc boutement avec reprise des chocs sur l'axe de pivotement, chocs et vibrations entièrement transmis au châssis du tracteur.

La présente invention a pour but de remédier à ces inconvénients. L'invention, telle qu'elle est caractérisée dans les revendications, résout le problème consistant à obtenir que le fourreau suive une trajectoire qui le fasse sortie vers l'arrière du tracteur, par un pivotement combiné à une translation, pour l'amener en position basse et que celui-ci vienne reprendre sa place vers l'avant, sous le tracteur, lors de verrouillage en position haute.

Le procédé de mise en oeuvre d'un attelage à fourreau mobile en rotation et en translation combinées, manoeuvré par l'intermédiaire du système de relevage du tracteur et de tiges télescopiques; ce fourreau mobile étant relié au châssis du tracteur par deux jeux de biellettes du longueurs différentes et comportant des manetons de relevage venant se bloquer dans des crochets de verrouillage escamotables solidaires de la partie supérieure de l'attelage, selon l'invention se caractérisé principalement en ce qu'il consiste à faire déplacer le fourreau mobile vers l'arrière lors de son pivotement sur les biellettes pour rejoindre la position basse, à déterminer la position des axes d'articulation et la longueur des biellettes ainsi que le débattement des tiges télescopiques de façon à obtenir, en position basse du dit fourreau mobile, un désalignement de celui-ci avec les biellettes avant selon un angle alpha dont le sommet est dirigé vers le haut, de façon à obtenir un arc-boutement sans recul du fourreau mobile, et, en position haute du fourreau mobile, un placage de celui-ci sur des butées élastiques, lorsqu'il est soumis à un effort dirigé vers l'avant du tracteur, en ce qu'il consiste à faire assurer l'effacement des crochets de verrouillage par les manetons de relevage du fourreau mobile, en ce qu'il consiste, pour obtenir le déverrouillage du fourreau mobile à comprimer les butées élastiques par l'intermédiaire du relevage et des tiges télescopiques puis à faire basculer les crochets de verrouillage, en ce qu'il consiste à utiliser le crochet de la barre de remorquage oscillante pour solidariser celle-ci au fourreau lorsque la dite barre est utilisée en position chape, et en ce qu'il consiste à interdir la sortie intempestive de l'anneau de remorquage du crochet de remorquage lorsque la barre de remorquage est en position crochet et que le fourreau mobile est verrouillé en position haute.

L'attelage à fourreau mobile en rotation et en translation combinées, manoeuvré par l'intermédiaire du système de relevage du tracteur et de tiges télescopiques dont le fourreau mobile est relié au châssis du tracteur par deux jeux de biellettes de longueurs différentes, et comportant des manetons de relevage venant se bloquer dans des crochets de verrouillage escamotables solidaires de la partie supérieure de l'attelage, dont la mise en oeuvre s'effectue selon le procédé faisant l'objet de l'invention se caractérisé principalement en ce que le déplacement vers l'arrière du fourreau mobile lors de son pivotement sur les biellettes pour rejoindre la position basse, est obtenu par l'intermédiaire du dispositif de relevage du tracteur et des tiges télescopies de longeueur réglable, en ce que le désalignement vers le haut du fourreau mobile par rapport aux biellettes avant selon un angle obtus alpha est déterminé par réglage du débattement maximum des tiges télescopiques, en ce que les butées élastiques sont d'une élasticité telle que le déverrouillage ne puisse s'effectuer que sous l'action des tiges télescopiques, en ce que l'effacement des crochets de verrouillage par les manetons de relevage du fourreau mobile est obtenu par l'intermédiaire d'une rampe dont est muni le bec du crochet de verrouillage en ce que le basculement des crochets de verrouillage pour obtenir la libération des manetons de relevage du fourreau est obtenu à distance par l'intermédiaire d'un câble et d'un levier, en ce que, en position chape, le crochet de la barre de remorquage oscillante est solidarisé au fourreau mobile par l'intermédiaire d'un axe fixe et d'un axe amovible passant par le bec du crochet et en ce que la sortie intempestive de l'anneau de remorquage du crochet de remorquage, lorsque la barre de remorquage est en position crochet et que le fourreau mobile est verrouillé en position haute, est interdite par une traverse située à l'extrémité arrière de la partie supérieure de l'attelage, juste au dessus de l'ouverture du crochet.

Les crochets de verrouillage escamobables sont rappelés en permanence en position de verrouillage par des ressorts.

Les avantages obtenus grâce à cette invention consistent essentiellement en ce que le fourreau mobile est, en position verrouillée, totalement situé sous la partie arrière du tracteur et qu'il est immobilisé contre cellel-ci par l'intermédiare de butées élastiques éliminant le jeu et absorbant les chocs et les vibrations, alors, qu'en position basse, il peut, après verrouillage, être reculé et abaissé en respectant une inclinaison favorable à l'accrochage du dispositif remorqué et à la transmission des efforts de remorquage au châssis du tracteur. Ce fourreau est, de plus, entièrement visible du poste de conduite du tracteur, lors des opérations d'accrochage et de décrochage du matériel remorqué.

L'invention est exposée ci-après plus en détail à l'aide de dessins représentant seulement un mode de réalisation.

La figure 1 représente, une vue de côté de l'attelage montrant le fourreau mobile en position verrouillée, avec indication de sa position basse et d'une position intermédiaire en trait Mixte.

La figure 2 représente, une vue de l'arrière de l'attelage, montrant le fourreau mobile en position verrouillée, avec indication de sa position basse en traite mixte.

La figure 3 représenté, une vue de dessus du fourreau mobile équipé d'une barre oscillante fixée par l'intermédiaire du crochet de remorquage.

La figure 4 représente, une vue de dessus du fourreau mobile équipé d'une barre oscillante montée en position crochet.

La figure 5 représente, une vue de dessus d'un fourreau d'épaisseur réduite équipé d'un crochet de remorquage.

Les figures représentent un attelage à fourreau mobile constitué principalement d'une partie supérieure 1, montée à l'extrémité arrière 2 du châssis d'un tracteur sous laquelle sont fixées des butées élastiques 3 et 4 et des oreilles 5 et 6 par rapport auxquelles sont articulées, par l'intermédiaire d'axes 7 et 8, les biellettes avant 9 et arrière 10, de longueurs différentes, supportant, par l'intermédiaire de manetons 11 et 12 le fourreau mobile 13, à l'intérieur duquel est monté une barre de remorquage 25 à crochet 14.

La manoeuvre du fourreau mobile s'effectue par l'intermédiaire du dispositif de relevage 15 du tracteur, de tiges télescopiques, de longueur réglable, 16 et de manetons 17.

Le verrouillage du fourreau mobile 13 contre la partie supérieure 1 de l'attelage, avec déformation des butées élastiques 3 et 4, est obtenu par l'intermédiaire de crochets escamotables 18, rappelés en position verrouillée par un ressort 19, dont le bec est muni d'une rampe 18a permettant l'effacement sous l'action des manetons 17.

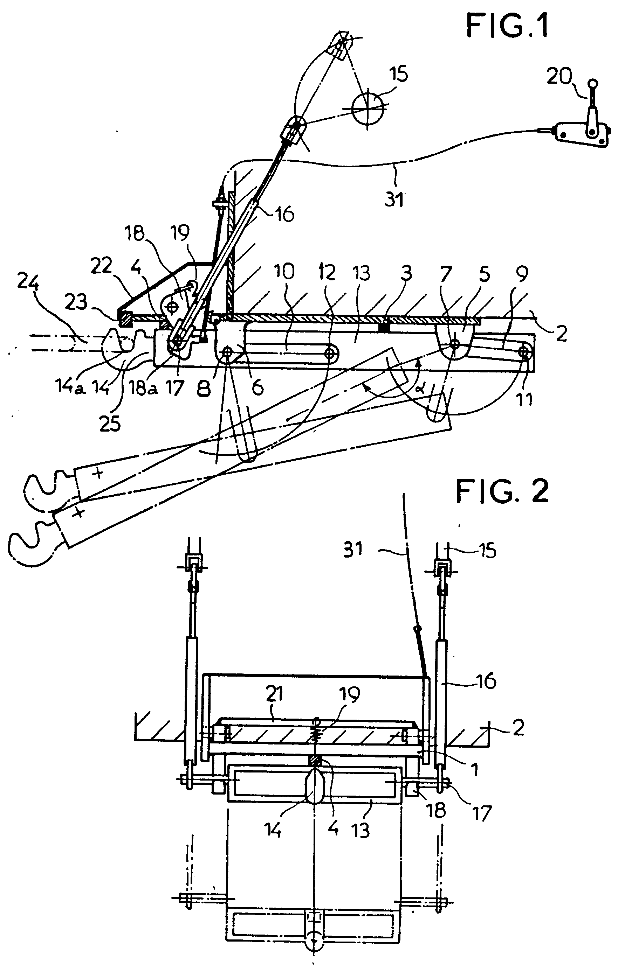

Le déverrouillage du fourreau mobile 13 s'effectue, par compression préalable des butées élastiques 3 et 4, par l'intermédiaire du relevage 15 et des tiges télescopiques 16, puis basculement des crochets 18 sous l'action du câble 31 et du levier 20. Comme on le voit sur la figure 2 les deux crochets escamotables 18 sont reliés entre eux par une traverse 21 sur laquelle est fixée l'une des extrémités du ressort de rappel 19. Ces mécanismes sont protégés par un carter 22. Une traverse 23, située à l'extrémité arrière de la partie supérieure de l'attelage, située juste au dessus de l'ouverture 14a du crochet de remorquage 14, interdit la sortie du dit crochet, de l'anneau de remorquage 24.

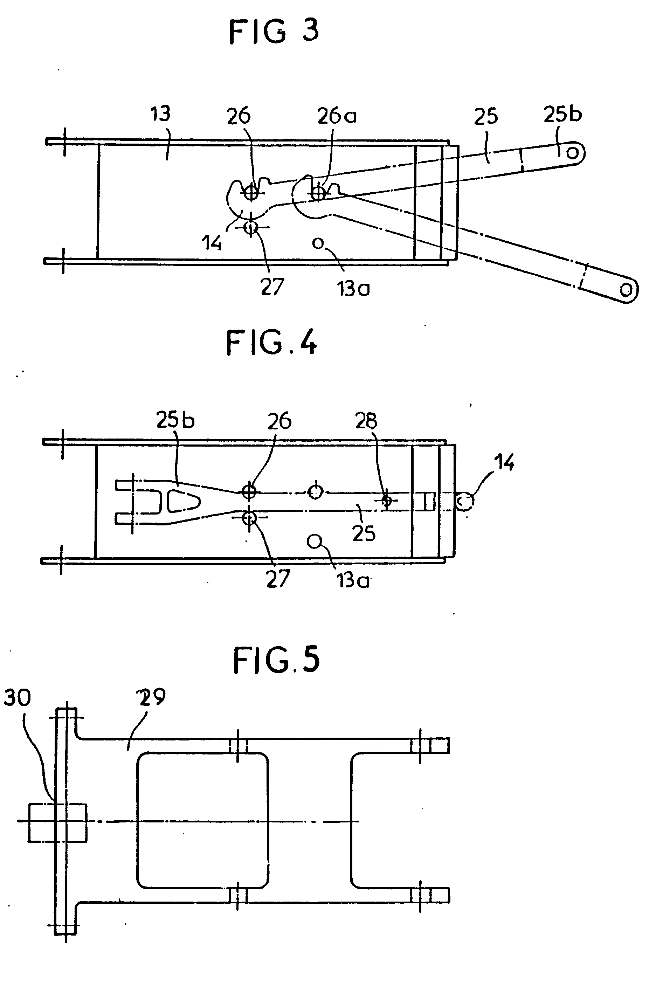

En examinant la figure 3, on remarque que la barre oscillante 25 est retenue à l'intérieur du fourreau mobile 13 par l'intermédiaire du crochet 14 d'un axe amovible 26 et d'un axe fixe formant butée 27. L'axe amovible 26 peut occuper une seconde position 26a, plus rapprochée de l'ouverture du fourreau mobile 13; ce qui permet d'obtenir deux amplitudes de débattement différentes. D'autres positions, permettant d'autres débattements, peuvent être envisagées.

La figure 4 montre le fourreau mobile 13 équipé de la même barre oscillante 25 que celle représentée à la figure 3, mais montée en position crochet. Dans ce cas, la chape 25b est introduite à l'intérieur du fourreau mobile 13 et la barre oscillante est immobilisée longitudinalement par un axe amovible 28 et latéralement par l'axe amovible 26 et l'axe fixe 27 formant butée. En position barre oscillante l'axe amovible 28 est mis en position de stockage dans un orifice 13a disposé latéralement dans une zone non balayée par la barre oscillante.

En examinant la figure 5 on remarque que, dans son mode de réalisation simplifié le fourreau mobile 29 est réduit d'épaisseur et que le dispositif d'accrochage 30, dont il est équipée, est fixé
sur sa partie arrière.

Comme on le voit en se reportant aux figures 1
et 2:

En position basse, le fourreau mobile 13 et les
biellettes avant 9 sont désalignés et forment un
angle α, dont le sommet est dirigé vers le haut, de
façon à obtenir un arc-boutement, sans recul du
fourreau mobile 13, lors d'une éventuelle sollicitation vers l'avant du tracteur. Ce désalignement est
limité par le débattement réglable des tiges télescopiques 16.

Lors d'une sollicitation du fourreau mobile 13
vers l'arrière du tracteur, il se produit une légère
rotation, vers l'arrière, des biellettes arrière 10,
jusqu'à obtention de l'alignement des biellettes
avant 9 avec le fourreau mobile 13. L'angle α n'est
que très légèrement inférieur à 180°, afin de
réduire au minimum l'amplitude du débattement
correspondant, tout en assurant la butée longitudinale par arc-boutement du fourreau mobile 13.

Au début de la remontée du fourreau mobile 13,
sous l'action du relevage 15 et des tiges télescopiques 16, l'angle α devient supérieur à 180°, ce qui
élimine l'arc-boutement et permet aux biellettes
avant et arrière d'assurer leur fonction.

En position verrouillée, le fourreau mobile est
plaqué contre les butées élastiques 3 et 4 sous
l'action du crochet de verrouillage 18. Lors d'une
sollicitation horizontale les composantes horizontales et verticales contribuent, par l'intermédiaire
des biellettes, à plaquer le fourreau mobile 13
contre les butées élastiques 3 et 4. Cet effet est
contrôlé par une légère inclinaison, vers le bas,
des biellettes avant 9.

L'élasticité des butées élastiques 3 et 4 est
définie de telle sorte que le déverrouillage ne
puisse s'effectuer que sous l'action des tiges
télescopiques de relevage et non sous l'action des
composantes des efforts appliqués.

Comme on le voit dans cet exemple l'utilisation
de jeux de biellettes 9 et 10, de longueurs différentes, permet de faire suivre au fourreau mobile
13 ou 29, une trajectoire prédéterminée, combinant une rotation à une translation.

## Revendications

1. Procédé de mise en oeuvre d'un attelage à
fourreau (13) mobile en rotation et en translation
combinées, manoeuvré par l'intermédiaire du
système de relevage (15) du tracteur et de tiges
télescopiques (16); ce fourreau mobile étant relié
au châssis du tracteur par deux jeux de biellettes
(9, 10) de longueurs différentes et comportant des
manetons de relevage (17) venant se bloquer
dans des crochets de verrouillage escamotables
(18) solidaires de la partie supérieure de l'attelage, caractérisé en ce qu'il consiste à faire déplacer le fourreau mobile (13) vers l'arrière lors de
son pivotement sur les bielletes (9, 10) pour
rejoindre la position basse, à déterminer la position des axes d'articulation et la longueur des
biellettes (9, 10) ainsi que le débattement des tiges télescopiques (16) de façon à obtenir, en
position basse du dit fourreau mobile (13), un
désalignement de celui-ci avec les biellettes avant
(9) selon un angle (α) dont le sommet est dirigé
vers le haut, de façon à obtenir un arc-boutement
sans recul du fourreau mobile (13), et, en position
haute du fourreau mobile (13), un placage de
celui-ci sur des butées élastiques (3, 4), lorsqu'il
est soumis à un effort dirigé vers l'avant du
tracteur, en ce qu'il consiste à faire assurer l'effacement des crochets de verrouillage (18) par les
manetons de relevage (17) du fourreau mobile
(13), en ce qu'il consiste, pour obtenir le déverrouillage du fourreau mobile (13), à comprimer
les butées élastiques (3, 4) par l'intermédiaire du
relevage (15) et des tiges télescopiques (16) puis à
faire basculer les crochets de verrouillage (18), en
ce qu'il consiste à utiliser le crochet (14) de la
barre de remorquage oscillante (25) pour solidariser celle-ci au fourreau (13) lorsque la dite barre
est utilisée en position chape, et en ce qu'il
consiste à interdire la sortie intempestive de l'anneau de remorquage (24) du crochet de remorquage (14) lorsque la barre de remorquage (25)
est en position crochet et que le fourreau mobile
(13) est verrouillé en position haute.

2. Attelage à fourreau (13), mobile en rotation et
en translation combinées, manoeuvré par l'intermédiaire du système de relevage (15) du tracteur
et de tiges teléscopiques (16); ce fourreau mobile
étant relié au châssis du tracteur par deux jeux de
biellettes (9, 10) de longueurs différentes, et
comportant des manetons de relevage (17)
venant se bloquer dans des crochets de verrouillage escamotables (18) solidaires de la partie
supérieure de l'attelage, dont la mise en oeuvre
s'effectue selon le procédé faisant l'objet de la
revendication 1 caractérisé en ce que le déplacement vers l'arrière du fourreau mobile (13) lors de
son pivotement sur les biellettes (9, 10) pour
rejoindre la position basse, est obtenu par l'intermédiaire du dispositif de relevage (15) du tracteur
et des tiges télescopiques de longueur réglable
(16), en ce que le désalignement vers le haut du
fourreau mobile (13) par rapport aux biellettes
avant (9) selon un angle obtus (α) est déterminé
par réglage du débattement maximum des tiges
télescopiques, en ce que les butées élastiques (3,
4) sont d'une élasticité telle que le déverrouillage
ne puisse s'effectuer que sous l'action des tiges
télescopiques (16), en ce que l'effacement des
crochets de verrouillage (18) par les manetons de
relevage (17) du fourreau mobile (13) est obtenu
par l'intermédiaire d'une rampe (18a) dont est
muni le bec du crochet de verrouillage (18), en ce
que le basculement des crochets de verrouillage
(18) pour obtenir la libération des manetons de
relevage (17) du fourreau (17) est obtenu à distance par l'intermédiaire d'un câble et d'un levier,
en ce que, en position chape, le crochet (14) de la
barre de remorquage oscillante (25) est solidarisé
au fourreau mobile (13) par l'intermédiaire d'un
axe fixe (27) et d'un axe amovible (26) passant par
le bec du crochet (14a) et en ce que la sortie
intempestive de l'anneau de remorquage (24) du crochet de remorquage (14), lorsque la barre de remorquage (25) est en position crochet et que le fourreau mobile (13) est verrouillé en position haute, est interdite par une traverse (23) situé à l'extrémité arrière de la partie supérieure (1) de l'attelage, juste au-dessus de l'ouverture (14a) du crochet (14).

3. Attelage selon la revendication 2 caractérisé en ce que les crochets de verrouillage escamotables (18) sont rappelés en permanence en position de verrouillage par des ressorts (19).

**Patentansprüche**

1. Verfahren zur Ausführung einer Anhängerkupplung mit einer kombiniert in Drehung und Verschiebung beweglichen Kupplungshülse (13), die durch die Abhebeeinrichtung (15) der Zugmaschine und durch Teleskopstangen (16) betätigt wird, wobei diese bewegliche Kupplungshülse mit dem Rahmen der Zugmaschine dukch zwei Sätze von Schwingarmen (9, 10) unterschiedlicher Länge verbunden ist und Abhebzapfen (17) aufweist, die in einklappbaren Verriegelungshaken (18) hängenbleiben, welche mit dem oberen Abschnitt der Anhängerkupplung fest verbunden sind, dadurch gekennzeichnet, daß das Verfahren aus einem Versetzen der beweglichen Kupplungshülse (13) nach hintan während ihres Schwenkens an den Schwingarmen (9, 10) besteht, um wieder in die untere Lage zu kommen, und einem Festlegen der Lage der Schwenkachsen und der Länge der Schwingarme (9, 10), um eine solche Betriebslänge der Teleskopstangen (16) zu erhalten, daß in der unteren Lage der beweglichen Kupplungshülse (13) deren Fehlausrichten mit den vorderen Schwingarmen (9) einen Winkel (α) ergibt, dessen Spitze nach oben gerichtet ist, um ein Im-Bogen-Hängen der beweglichen Kupplungshülse (13) ohne Zurückspringen zu erzielen, und in der oberen Lage der beweglichen Kupplungshülse (13) deren Platzzuweisung an den elastischen Anschlägen (3, 4), wenn die Kupplungshülse einer gegen den vorderen Abschnitt der Zugmaschine gerichteten Kraft unterworfen ist,

daß das Verfahren aus einem Absichern gegen das Entfernen der Verriegelungshaken (18) durch die Abhebzapfen (17) der beweglichen Kupplungshülse (13) besteht,

daß das Verfahren, um ein Entriegeln der beweglichen Kupplungshülse (13) zu erzielen, aus einem Zusammendrücken der elastischen Anschläge (3, 4) mittels der Abhebeeinrichtung (15) und der Teleskopstangen (16) und dann aus einem Schwenken der Verriegelungshaken (18) besteht,

daß das Verfahren aus dem Verwenden des Hakens (14) der schwingenden Abschleppstange (25) besteht, um diese fest mit der Kupplungshülse (13) zu verbinden, wenn diese Stange in Bügelhaltestellung verwendet wird, und

daß das Verfahren aus einem Verhindern des unzeitigen Verlassens des Abschleppringes (24) vom Abschlepphaken (14) besteht, wenn die Abschleppstange (25) in eingehakter Stellung und die bewegliche Kupplungshülse (13) in der oberen Lage verriegelt sind.

2. Anhängerkupplung mit Kupplungshülse (13), die kombiniert in Drehung und Verschiebung beweglich ist und die durch die Abhebeeinrichtung (15) der Zugmaschine und durch Teleskopstangen (16) betätigt wird, wobei diese bewegliche Kupplungshülse mit dem Rahmen der Zugmaschine durch zwei Sätze von Schwingarmen (9, 10) unterschiedlicher Länge verbunden ist und Abhebzapfen (17) aufweist, die in einklappbaren Verriegelungshaken (18) hängenbleibeb, welche mit dem oberen Abschnitt der Anhängerkupplung fest verbunden sind, deren Ausführung entsprechend dem Verfahren nach Anspruch 1 erfolgt, dadurch gekennzeichnet,

daß das Versetzen der beweglichen Kupplungshülse (13) nach hinten während ihres Schwenkens an den Schwingarmen (9, 10), um wieder in die untere Lage zu kommen, durch die Abhebeeinrichtung (15) der Zugmaschine und die Teleskopstangen einstellbarer Länge (16) erzielt wird,

daß das Fehlausrichten der beweglichen Kupplungshülse (13) nach oben in Bezug auf die vorderen Schwingarme (9) in einem stumpfen Winkel (α) durch Einstellen der maximalen Betriebslange der Teleskopstangen festgelegt ist,

daß die elastischen Anschläge (3, 4) eine solche Elastizität aufweisen, daß die Entriegelung nur unter Betätigung der Teleskopstangen (16) erfolgen kann,

daß das Entfernen der Verriegelungshaken (18) durch die Abhebzapfen (17) der beweglichen Kupplungshülse (13) mittels einer Rampe (18a) erzielt wird, an der die Spitze des Verriegelungshakens (18) angebracht ist,

daß das Schwenken des Verriegelungshakens (18), um die Freigabe der Abhebzapfen (17) der Kupplungshülse (13) zu erreichen, mittels eines Kabels und eines Hebels durch Fernbedienung erzielt wird,

daß in der Bügelhaltestellung der Haken (14) der schwingenden Abschleppstange (25) mit der beweglichen Kupplungshülse (13) mittels eines festen (27) und eines unbeweglichen Zapfens (26), der an der Hakenspitze (14a) vorbeigeht, fest verbunden ist und

daß das unzeitige Verlassen des Abschleppringes (24) vom Abschlepphaken (14), wenn die Abschleppstange (25) in eingehakter Stellung und die bewegliche Kupplungshülse (13) in der oberen Lage verriegelt sind, durch einen Querstrebe (23) verhindert wird, die am äußersten hinteren Ende des oberen Abschnitts (1) der Anhängerkupplung genau oberhalb der Öffnung (14a) des Hakens (14) angeordnet ist.

3. Anhängerkupplung nach Anspruch 2, dadurch gekennzeichnet, daß die einklappbaren Verriegelungshaken (18) durch Federn (19) dauernd in Verriegelungsstellung zurückgeholt werden.

## Claims

1. A method of implementation of a coupling with sleeve (13) movable in rotation and translation combined, operated by means of the lifting system (15) of the tractor and of telescopic rods (16); this movable sleeve being connected to the chassis of the tractor by means of two sets of links (9, 10) of different lengths and having lifting crank pins (17) which lock in retractable locking hooks (18) integral with the upper part of the coupling, characterized in that it consists in bringing about the movement of the movable sleeve (13) towards the rear as it swivels on the links (9, 10) to reach the low position, in establishing the position of the pivot axes and the lengths of the links (9, 10) as well as the clearance of the telescopic rods (16) so as to obtain, in the low position of the said movable sleeve (13), a disalignment of the latter with the front links (9) according to an α angle the apex of which is upwardly directed, so as to obtain a staying without backward movement of the movable sleeve (13), and, in the high position of the movable sleeve (13) an application of the latter on resilient stops (3, 4), when it is subjected to a force directed towards the front of the tractor, in that it consists in producing the retraction of the locking hooks (18) through the intervention of the lifting crank pins (17) of the movable sleeve (13), in that it consists, to obtain the release of the movable sleeve (13), in compressing the resilient stops (3, 4) by means of the lifting system (15) and of the telescopic rods (16), and then swivelling the locking hooks (18), in that it consists in using the hook (14) of the swinging tow bar (25) to connect the latter rigidly to the sleeve (13) when the said draw bar is used in coupling position, and in that it consists in preventing the untimely extraction of the tow ring (24) from the tow hook (14) when the draw bar (25) is in hook position and the movable sleeve (13) is locked in high position.

2. A sleeve coupling (13), movable in rotation and translation combined, operated by means of the lifting system (15) of the tractor and telescopic rods (16); this movable sleeve being connected to the chassis of the tractor by means of two sets of links (9, 10) of different lengths, and having lifting crank pins (17) which lock in retractable locking hooks (18) integral with the upper part of the coupling, the utilization of which is carried out according to the method which is the subject of claim 1, characterized in that the rearward movement of the movable sleeve (13) as it pivots on the links (9, 10) to reach the low position is obtained by means of the lifting system (15) of the tractor and of the telescopic rods of variable length (16), and in that the upward disalignment of the movable sleeve (13) relative to the front links (9) according to an obtuse angle α is established by adjustment of the maximum clearance of the telescopic rods, in that the resilient stops (3, 4) have a degree of elasticity such that release can take place only as a result of the action of the telescopic rods (16), in that the retraction of the locking hooks (18) by the lifting crank pins (17) of the movable sleeve (13) is obtained by means of a rockshaft (18a) with which the nose of the locking hook (18) is fitted, in that the rocking of the locking hooks (18) to obtain the release of the lifting crank pins (17) from the sleeve (13) is effected by remote operation by means of a cable and a lever, in that, in coupling position, the hook (14) of the swivelling draw bar (25) is rigidly secured with the movable sleeve (13) by means of a stationary axle (27) and of a removable axle (26) passing through the nose of the hook (14a), and in that the untimely disconnection of the towing ring (24) from the towing hook (14), when the draw bar (25) is in hook position and the movable sleeve (13) is locked in the high position, is prevented by a cross-bar (23) situated at the rear end of the upper part (1) of the coupling, precisely above the opening (14a) of the hook (14).

3. A coupling according to claim 2, characterized in that the retractable locking hooks (18) are permanently recalled to locking position by springs (19).

FIG.1

FIG. 2

1

## FIG 3

## FIG.4

## FIG.5